# EUROPÄISCHE PATENTSCHRIFT

(11) **EP 1 913 317 B1**
(45) Veröffentlichungstag und Bekanntmachung des Hinweises auf die Patenterteilung: **06.07.2016**
(21) Anmeldenummer: 06776796.2
(22) Anmeldetag: 11.08.2006
(51) Int. Cl.: F25D 23/08, F25D 23/02

(54) **TÜR FÜR EIN KÜHL- UND/ODER GEFRIERGERÄT**
DOOR FOR A REFRIGERATING AND/OR FREEZING APPLIANCE
PORTE POUR UN APPAREIL DE RÉFRIGÉRATION ET/OU DE CONGÉLATION

(30) Priorität: 12.08.2005 DE 20512783 U; 22.09.2005 DE 20514971 U
(43) Veröffentlichungstag der Anmeldung: 23.04.2008
(73) Patentinhaber: Liebherr-Hausgeräte Ochsenhausen GmbH, 88416 Ochsenhausen (DE)
(72) Erfinder: KAUK, Franz, 88353 Kissleg (DE); ALBINGER, Monika, 88400 Biberach (DE)
(74) Vertreter: Herrmann, Uwe
(86) Internationale Anmeldenummer: PCT/EP2006/007979
(87) Internationale Veröffentlichungsnummer: WO 2007/020027

(56) Entgegenhaltungen:
- EP-A2- 0 152 989
- DE-A1- 3 022 381
- DE-A1- 19 907 147
- FR-A1- 2 585 117
- US-A- 3 378 957
- US-A- 4 653 819
- US-A- 5 289 657

## Beschreibung

Die Erfindung betrifft eine Tür für ein Kühl- und/oder Gefriergerät, die eine Innentür und eine Außentür aufweist, wobei an der Tür eine Dichtung angeordnet ist, die sich abschnittsweise in einem Bereich zwischen Innen- und Außentür befindet.

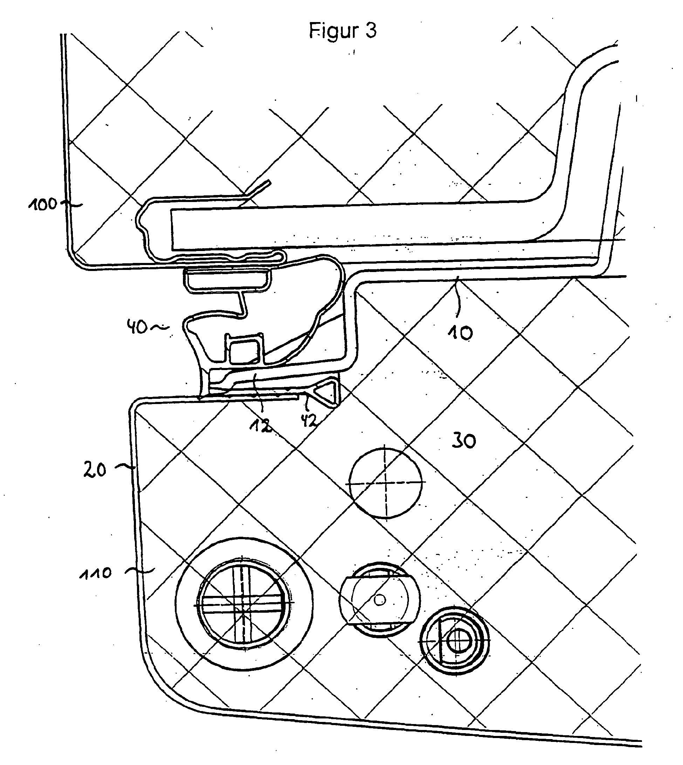

Türdichtungen heute bekannter Kühl- bzw. Gefriergeräte werden auf den Rand der Innentüre aufgezogen und zusammen mit den Außentüren verschäumt. Figur 3 zeigt in einer Querschnittsansicht die Innentür 10, die Außentür 20 und den zwischen Innentür 10 und Außentür 20 befindlichen ausgeschäumten Bereich 30. Der Randbereich 12 der Innentür 10 ist zurückversetzt, wie dies aus Figur 3 hervorgeht. Zwischen diesem zurückversetzten Randbereich 12 und dem angrenzenden Bereich der Außentür 20 befindet sich der Fußbereich 42 der Dichtung 40.

Die Dichtung 40 befindet sich im wesentlichen in dem durch den zurückversetzten Randbereich 12 gebildeten Eckbereich und liegt im geschlossenen Zustand der Tür 110 an einer Fläche des Korpus 100 des Kühl- bzw. Gefriergerätes an, wie dies aus Figur 3 hervorgeht.

Aufgrund des zwischen Innentür 10 und Außentür 20 aufgenommenen Fußbereiches 42 der Dichtung 40 ist ein einfaches Wechseln der Dichtung 40 nicht möglich. Im Regelfall muß im Kundendienstfall eine solche Tür 110 komplett gegen eine neue Tür getauscht werden.

In einigen Fällen wurde im Reparaturfall die Türdichtung 40 herausgezogen und unter hohem Aufwand eine neue Dichtung untergeschoben und mit Schrauben gesichert, wobei eventuell noch das Dichtungsfußende 42 abgetrennt wurde. Diese Vorgesehenweise ist zum einen sehr aufwendig und zum zweiten bringt sie ein hohes Risiko der Beschädigung mit sich. Des weiteren ist die Isolation bzw. Dichtfunktion der Tür bzw. der Dichtung unter Umständen nicht mehr vollständig gewährleistet.

Um hier Abhilfe zu schaffen, wurde des weiteren vorgeschlagen, dass im Kundendienstfall die eingeschäumte Seriendichtung entfernt wird und dass ein Halteprofil mit einer U-förmigen Nut zwischen die Innentür 10 und die Außentür 20 eingeschoben wird. In diese Nut kann eine Ersatzteildichtung eingesteckt werden. Eine derartige Lösung ist aus der DE 203 01 950 U1 bekannt. Die Halteprofile weisen ein Befestigungsprofil auf, das unter den Innentürrand gesteckt werden muss, was das vollständige Entfernen von Dichtungsresten der Dichtung 40 bedingt. Dies stellt sich als verhältnismäßig schwierig, aufwendig und teuer dar.

Des weiteren ist es bekannt, in die Innentür eine umlaufende Nut mit anzuziehen, in die vor oder nach dem Schäumprozess eine Türdichtung eingesetzt wird. Eine derartige Lösung ist beispielsweise aus der WO 00/28267 bekannt. Ein Nachteil bei dieser Lösung besteht darin, dass die Schaumdichtheit zwischen Innen- und Außentür nicht prozesssicher hergestellt werden kann.

Aus der DE 30 22 381 A1 ist eine Tür bekannt, bei der abschnittsweise zwischen der Innen- und der Außentür eine Dichtung angeordnet ist und wobei die Tür eine Halterung aufweist, an der eine Ersatzdichtung montiert werden kann. Diese Schrift offenbart sämtliche Merkmale des Oberbegriffs des Anspruchs 1.

Der vorliegenden Erfindung liegt daher die Aufgabe zugrunde, eine Tür eines Kühl- bzw. Gefriergerätes dahingehend weiterzubilden, dass ein einfaches Wechseln der Türdichtung möglich ist.

Diese Aufgabe wird durch eine Tür mit den Merkmalen des Anspruchs 1 gelöst. Danach ist vorgesehen, dass die Tür eine Halterung aufweist, in der oder an der eine Ersatzdichtung aufnehmbar ist. Die Herstellung der Tür kann bei der Erstausstattung, das heißt im Auslieferungszustand mit einer heute üblichen Seriendichtung gemäß Figur 3 ausgeführt werden. Diese wird über den Innentürrand aufgezogen und mit der Außentür verschäumt, was gegenüber dem in Figur 3 dargestellten Beispiel zunächst keine Veränderung darstellt, so dass auch keine Prozessänderungen erforderlich sind.

Soll die Türdichtung gewechselt werden, wird die Türdichtung abgetrennt und in oder an der Halterung der erfindungsgemäßen Tür wird eine Ersatzdichtung befestigt. Eine derartige Lösung weist den Vorteil auf, dass ein vollständiges Entfernen der eingeschäumten Dichtung nicht zwingend erforderlich ist. Vorzugsweise kann vorgesehen sein, dass der zwischen Innen- und Außentür eingespannte Bereich, das heißt der Dichtungsfuß, nicht entfernt wird. Dies hat den Vorteil, dass die Seriendichtung in ihrem zwischen Innentür und Außentür befindlichen Bereich weiterhin Schaumdichtheit zwischen Außen- und Innentüre gewährleistet.

Die Halterung für die Ersatzdichtung kann beispielsweise an der Innentür angeordnet sein und ist vorzugsweise als mit der Innentür angezogene Nut ausgeführt.

Erfindungsgemäß weist die Dichtung eine Sollbruchstelle auf. Soll die Türdichtung gewechselt werden, wird die Dichtung an der Sollbruchstelle abgetrennt. Dabei ist die Sollbruchstelle derart angeordnet, dass sie in an den Bereich der Dichtung angrenzt, der zwischen Innen- und Außentür aufgenommen ist. Dies weist den bereits genannten Vorteil auf, daß der Dichtungsfuß an der Tür verbleibt, während weitere Bestandteile der Türdichtung entfernt werden können.

In weiterer Ausgestaltung der Erfindung ist vorgesehen, daß sich in dem Bereich zwischen der Innen- und der Außentür eine Ausschäumung befindet und dass der zwischen der Innen- und Außentür aufgenommene Bereich der Dichtung derart ausgeführt ist, daß er die Schaumdichtheit der Tür gewährleistet. Wie bereits ausgeführt, ermöglicht es die erfindungsgemäße Ausführung der Tür, die ursprünglich vorgesehene Dichtung, das heißt die im Auslieferungszustand vorgesehene Seriendichtung insoweit auch beim Dichtungswechsel an dem Gerät zu belassen, daß der Dichtungsfuß erhalten bleibt. Der verbleibende Dichtungsfuß erschwert den Dichtungswechsel nicht, da die Ersatzdichtung im Bedarfsfall an der dafür erfindungsgemäß vorgesehenen Halterung angeordnet wird. Vorzugsweise ist die Halterung zur Aufnahme einer Ersatzdichtung umlaufend um die Tür ausgeführt.

Die Halterung zur Aufnahme einer Ersatzdichtung kann beispielsweise als Nut ausgeführt sein. Denkbar ist ebenfalls, diese als Vorsprung auszuführen, auf den die Ersatzdichtung aufgesteckt wird.

In weiterer Ausgestaltung der Erfindung weist die Innentür eine die Innenseite der Tür bildende Wandung und einen gegenüber dieser Wandung stufenförmig zurückversetzten Randbereich auf, wodurch ein Eckbereich ausgebildet ist, in dem die Halterung für die Ersatzdichtung angeordnet ist.

Der Eckbereich kann durch den zurückversetzten Randbereich und einen Wandabschnitt gebildet werden, der diesen zurückversetzten Randbereich mit der die Innenseite der Tür bildenden Wandung verbindet. Der Randbereich und dieser verbindende Wandabschnitt können im wesentlichen aufeinander senkrecht stehen, jedoch sind natürlich auch andere Winkel denkbar. Die Halterung kann als Nut oder auch als Vorsprung ausgeführt sein, die/der in einem Winkel im Bereich zwischen 30° und 60°, vorzugsweise in einem Winkel von 45° zu dem Wandabschnitt oder dem Randbereich verläuft. Die Nut oder der Vorsprung kann in dem Eckbereich angeordnet sein, der sich zwischen dem genannten verbindenden Wandabschnitt und dem zurückversetzten Randbereich befindet.

In weiterer Ausgestaltung der Erfindung ist die Halterung als Nut ausgeführt und die Ersatzdichtung weist einen Ansatz auf, der in der Nut derart aufnehmbar ist, daß die Ersatzdichtung gegen Herausfallen gesichert ist, jedoch bei Bedarf gewechselt werden kann. Vorzugsweise ist vorgesehen, daß der Ansatz der Ersatzdichtung durch einen Steg gebildet wird, der vorzugsweise auf den Nutgrund ausgerichtet ist bzw. zu diesem senkrecht verläuft. An diesem Steg können ein oder mehrere Fortsätze angeordnet sein, die im eingesetzten Zustand der Ersatzdichtung an der Nutwandung anliegen und gegenüber der Nutwandung in Einschubrichtung der Lippe in die Nut geneigt sind. Diese Fortsätze wirken somit gleichsam als Widerhaken die ein Herausfallen der Ersatzdichtung aus der Halterung verhindern und somit einen zuverlässigen Betrieb des Gerätes gewährleisten.

In weiterer Ausgestaltung der Erfindung ist vorgesehen, dass die Dichtung nur noch mit dem sich in einem Bereich zwischen Innen- und Außentür befindlichen Abschnitt vorliegt, d.h. der Rest der Dichtung vollständig oder zumindest teilweise entfernt wurde, und dass in der Halterung eine Ersatzdichtung aufgenommen ist. Dieser Zustand der Tür ergibt sich dann, wenn die ursprünglich eingesetzte Dichtung bis auf deren Dichtungsfuß zumindest teilweise entfernt wurde und an der genannten Halterung eine Ersatzdichtung montiert wurde.

Die Erfindung betrifft ferner ein Kühl- und/oder Gefriergerät mit einer Tür nach einem der Ansprüche 1 bis 9.

Unter Tür gemäß der vorliegenden Erfindung ist nicht nur eine um eine vertikal stehende Achse verschwenkbare Tür, sondern auch ein um eine horizontale Achse verschwenkbarer Deckel zu verstehen, der beispielsweise bei Gefriertruhen Verwendung findet.

Weitere Einzelheiten und Vorteile der Erfindung werden anhand eines in der Zeichnung dargestellten Ausführungsbeispiels näher erläutert. Es zeigt:
- Figur 1:: eine Querschnittsansicht der erfindungsgemäßen Tür mit Seriendichtung,

- Figur 2:: eine Querschnittsansicht der erfindungsgemäßen Tür mit Ersatzdichtung und
- Figur 3:: eine Querschnittsansicht der Tür gemäß dem Stand der Technik.

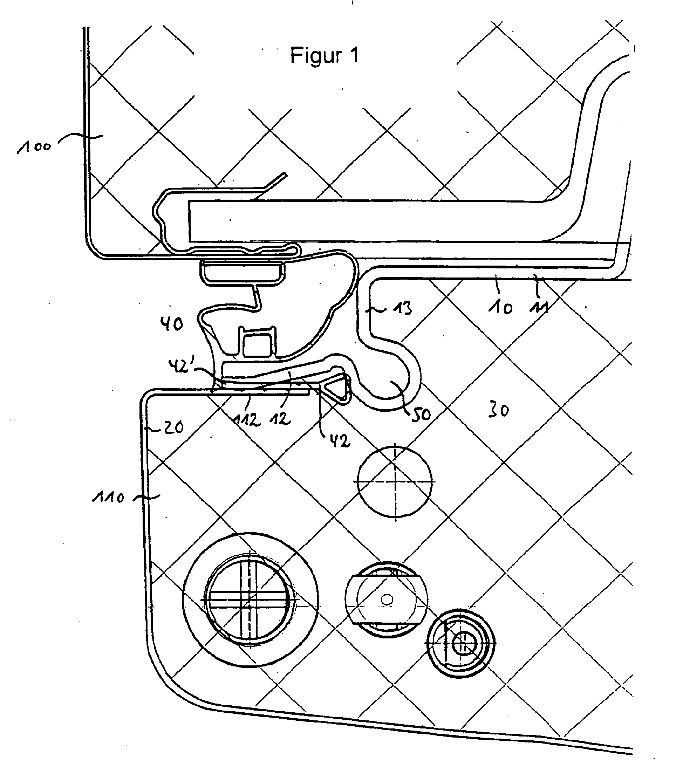

Figur 1 zeigt die Tür 110 gemäß der vorliegenden Erfindung sowie den Korpus 100 eines Kühl- bzw. Gefriergerätes. Die Tür 110 besteht aus der Innentür 10 und der Außentür 20, zwischen denen eine Ausschäumung 30 zum Zwecke der thermischen Isolation aufgenommen ist. Die Innentür 10 kann aus Kunststoff und die Außentür 20 aus Blech bestehen. Die Innentür 10 weist eine Wandung 11 auf, die die Innenseite der Tür bildet. Die Innentür 10 weist den stufenförmig zurückversetzten Randbereich 12 auf, der gegenüber der Wandung 11 zurückversetzt ist und damit im geschlossenen Zustand der Tür 110 einen größeren Abstand vom Korpus 100 des Gerätes aufweist als die Wandung 11.

Die Wandung 11 und der Randbereich 12 sind durch einen Wandabschnitt 13 miteinander verbunden, der relativ zu der Wandung 11 sowie auch zu dem Randbereich 12 im wesentlichen senkrecht verläuft, wie dies aus Figur 1 hervorgeht. In dem Bereich, in dem der Randbereich 12 und der Wandabschnitt 13 aneinandergrenzen, befindet sich die als Nut 50 ausgeführte Halterung. Die Nut 50 ist umlaufend um die Tür ausgeführt.

Die auf den Nutgrund der Nut 50 senkrecht stehende Nutachse verläuft in etwa im 45°-Winkel relativ zu dem verbindenden Wandabschnitt 13 bzw. zu dem Randabschnitt 12. Die Nut 50 befindet sich in der Ecke des durch den Randabschnitt 12 und den Wandabschnitt 13 gebildeten Bereiches.

Die Dichtung 40 besteht aus einem abdichtenden Abschnitt, der in geschlossenem Zustand der Tür 110 an einer Fläche des Korpus 100 anliegt sowie aus einem Dichtungsfuß 42, der die Dichtung 40 an der Tür 110 hält. Der Dichtungsfuß 42 ist zwischen dem Randabschnitt 12 und dem dazu in etwa parallel verlaufenden Abschnitt 112 der Außentür 20 aufgenommen. Der Abschnitt 112 der Außentür 20, der Randabschnitt 12 der Innentür 10 sowie die die Innenseite der Tür bildende Wandung 11 verlaufen in etwa parallel zueinander sowie parallel zu der Fläche des Korpus 100 des Gerätes, an dem im geschlossen Zustand der Tür 110 die Dichtung 40 anliegt.

In dem Endbereich 42' des Dichtungsfußes 42, an den sich die weiteren Bestandteile der Dichtung 40 anschließen, ist eine Sollbruchstelle angeordnet, an der der Dichtungsfuß 42 von dem restlichen Bestandteil der Dichtung 40 getrennt werden kann. Dieser restliche Bestandteil der Dichtung 40 befindet sich in dem durch den zurückversetzten Randbereich 12 und den Wandabschnitt 13 gebildeten Bereich.

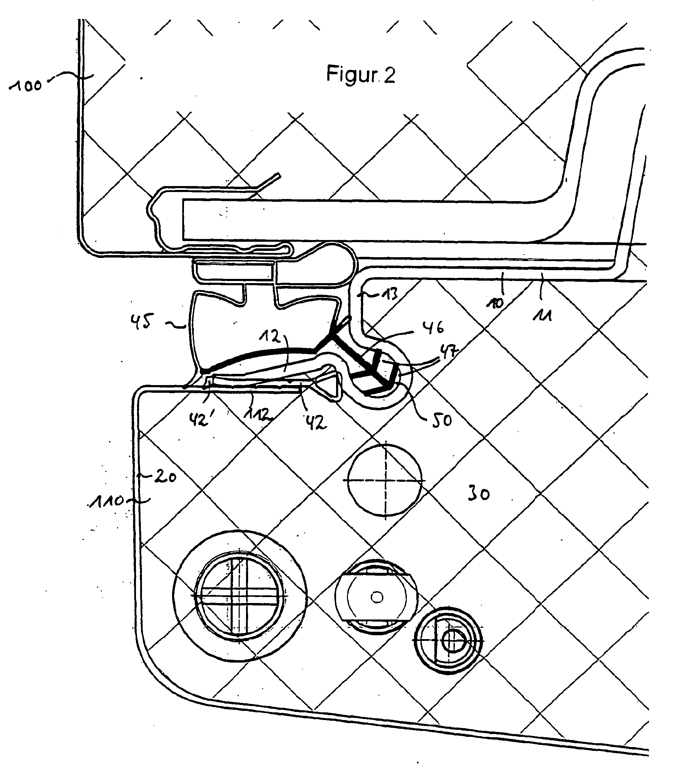

Der Zustand mit abgetrennter Seriendichtung ist in Figur 2 dargestellt. Aus dieser Figur ergibt sich, daß zwischen Innentür 10 und Außentür 20 bzw. zwischen dem Randabschnitt 12 und dem Außentürabschnitt 112 nach wie vor der Dichtungsfuß 42 angeordnet ist. Der Rest der Dichtung 40 wurde entfernt. An der Nut 50 wurde die Ersatzdichtung 45 angeordnet, die einen Ansatz in Form eines Steges 46 aufweist, der sich in die Nut 50 erstreckt. Beidseitig von dem Steg 46 erstrecken sich Fortsätze 47, die als Widerhaken ausgeführt sind und gegenüber der Nutwandung in Einschubrichtung des Steges 46 geneigt sind, wie dies aus Figur 2 hervorgeht. Dies erschwert ein ungewolltes Lösen der Ersatzdichtung 45 aus der Nut 50.

Die Erfindung weist den Vorteil auf, daß für den Fall, daß die Türdichtung 40 gewechselt werden muss, diese an der Sollbruchstelle 42' abgetrennt wird. Ein vollständiges Entfernen der eingeschäumten Dichtung, speziell das Entfernen des Dichtungsfußes 42 zwischen Innentür 10 und Außentür 20 ist nicht erforderlich. Vielmehr kann dieser Bereich 42 an Ort und Stelle verbleiben, was hinsichtlich der Schaumdichtheit von Vorteil ist.

Eine separate Ersatzteildichtung 45 kann nun ohne weiteres in die vorhandene Nut 50 eingesetzt werden, wie dies aus Figur 2 hervorgeht.

Die vorliegende Erfindung weist ferner die Vorteile auf, daß der heute übliche Türaufbau belassen werden kann. An den Blechaußentüren 110 sind keine Änderungen erforderlich. Die Seriendichtung gewährt die Schaumdichtheit zwischen Außen- und Innentür, speziell in dem in den Figuren dargestellten Eckbereich.

Die vorliegende Erfindung stellt eine kostenoptimierte Serienlösung dar. Sie ermöglicht ein einfaches und sauberes teilweises Entfernen der Seriendichtung durch eine vorzugsweise vorgesehene Sollbruchstelle. Des weiteren ist als Vorteil zu nennen, daß es sich um eine einfache und optisch ansprechende Lösung für den Ersatzteilfall handelt.

Die vorgestellte Lösung vereint die Vorteile beider aus dem Stand der Technik separat bekannten Ausführungen mit einer nur eingeschäumten Dichtung sowie mit einer nur wechselbaren Dichtung mit Nut auch im Auslieferungszustand.

## Patentansprüche

1. Tür (110) für ein Kühl- und/oder Gefriergerät, wobei die Tür eine Innentür (10) und eine Außentür (20) sowie eine Dichtung (40) aufweist, die abschnittsweise in einem Bereich zwischen Innen- (10) und Außentür (20) angeordnet ist und die eine Sollbruchstelle (42') aufweist, wobei die Tür eine Halterung (50) aufweist, an der eine Ersatzdichtung (45) montierbar ist,
**dadurch gekennzeichnet,**
**dass** die Sollbruchstelle (42') an den Abschnitt der Dichtung (40) angrenzt, der zwischen Innen- (10) und Außentür (20) aufgenommen ist,
wobei der zwischen Innen- und Außentür (20) aufgenommene Abschnitt ein zwischen Innen- (10) und Außentür (20) eingespannter Dichtungsfuß (42) der Dichtung (40) ist und die Sollbruchstelle (42') im Endbereich des Dichtungsfußes (42) angeordnet ist, so dass beim Wechseln der Dichtung (40) dieser Dichtungsfuß (42) an Ort und Stelle verbleibt und von dem restlichen Bestandteil der Dichtung (40) getrennt wird.

2. Tür (110) nach einem der vorhergehenden Ansprüche, **dadurch gekennzeichnet, dass** der durch die Innen- (10) und Außentür (20) begrenzte Raum der Tür (110) ausgeschäumt ist und dass der zwischen der Innen- (10) und Außentür (20) aufgenommene Abschnitt der Dichtung (40) derart ausgeführt und angeordnet ist, dass er die Schaumdichtheit der Tür (110) gewährleistet.

3. Tür (110) nach einem der vorhergehenden Ansprüche, **dadurch gekennzeichnet, dass** die Halterung zur Befestigung einer Ersatzdichtung (45) umlaufend ausgeführt ist.

4. Tür (110) nach einem der vorhergehenden Ansprüche, **dadurch gekennzeichnet, dass** die Halterung zur Aufnahme einer Ersatzdichtung (45) als Nut (50) oder als Vorsprung ausgeführt ist.

5. Tür (110) nach einem der vorhergehenden Ansprüche, **dadurch gekennzeichnet, dass** die Innentür (10) eine die Innenseite der Tür (110) bildende Wandung und einen gegenüber dieser Wandung stufenförmig zurückversetzten Randbereich (12) aufweist, wodurch ein Eckbereich ausgebildet wird, und dass die Halterung für die Ersatzdichtung (45) in diesem Eckbereich angeordnet ist.

6. Tür (110) nach Anspruch 5, **dadurch gekennzeichnet, dass** der Eckbereich durch den zurückversetzten Randbereich (12) und einen Wandabschnitt (13) begrenzt wird, der den Randbereich (12) mit der die Innenseite der Tür (110) bildenden Wandung verbindet, wobei der Randbereich (12) und der Wandabschnitt (13) im wesentlichen aufeinander senkrecht stehen und wobei die Halterung als Nut (50) ausgeführt ist, die in einem Winkel im Bereich zwischen 30° und 60°, vorzugsweise in einem Winkel von 45° zu dem Wandabschnitt (13) oder dem Randbereich (12) verläuft.

7. Tür (110) nach einem der vorhergehenden Ansprüche, **dadurch gekennzeichnet, dass** die Halterung als Nut (50) ausgeführt ist und dass die Ersatzdichtung (45) einen Ansatz aufweist, der in der Nut (50) derart aufnehmbar ist, dass die Ersatzdichtung (45) gegen Herausfallen gesichert ist.

8. Tür (110) nach Anspruch 7, **dadurch gekennzeichnet, dass** der Ansatz der Ersatzdichtung (45) durch einen Steg (46) gebildet wird, an dem ein oder mehrere Fortsätze (47) angeordnet sind, die im eingesetzten Zustand der Ersatzdichtung (45) an der Nutwandung anliegen und gegenüber der Nutwandung in Einschubrichtung des Steges (46) in die Nut (50) geneigt sind.

9. Tür (110) nach einem der vorhergehenden Ansprüche, **dadurch gekennzeichnet, dass** von der Dichtung (40) nur der zwischen Innen- (10) und Außentür (20) befindliche Abschnitt verblieben ist, und dass in der Halterung eine Ersatzdichtung (45) aufgenommen ist.

10. Kühl- und/oder Gefriergerät mit einer Tür (110) nach einem der Ansprüche 1 bis 9.

## Claims

1. A door (110) for a refrigerator and/or freezer, wherein the door includes an inner door (10) and an outer door (20) as well as a seal (40), portions of which are arranged in a region between inner door (10) and outer door (20) and which has a predetermined breaking point (42'), wherein the door includes a holder (50) on which a spare seal (45) can be mounted,
**characterized in**
**that** the predetermined breaking point (42') adjoins that portion of the seal (40) which is accommodated between inner door (10) and outer door (20),
wherein the portion accommodated between inner and outer door (20) is a sealing foot (42) of the seal (40) clamped between inner door (10) and outer door (20) and the predetermined breaking point (42') is arranged in the end region of the sealing foot (42), so that when replacing the seal (40) this sealing foot (42) remains where it is and is separated from the remaining part of the seal (40).

2. The door (110) according to the preceding claim, **characterized in that** the space of the door (110) defined by inner door (10) and outer door (20) is foam-filled and that the portion of the seal (40) accommodated between inner door (10) and outer door (20) is configured and arranged such that it ensures the foam tightness of the door (110).

3. The door (110) according to any of the preceding claims, **characterized in that** the holder for fixing a spare seal (45) extends all around the door.

4. The door (110) according to any of the preceding claims, **characterized in that** the holder for accommodating a spare seal (45) is configured as groove (50) or as protrusion.

5. The door (110) according to any of the preceding claims, **characterized in that** the inner door (10) includes a wall forming the inside of the door (110) and an edge region (12) retracted with respect to this wall in the form of a step, whereby a corner region is formed, and that the holder for the spare seal (45) is arranged in this corner region.

6. The door (110) according to claim 5, **characterized in that** the corner region is defined by the retracted edge region (12) and a wall portion (13) which connects the edge region (12) with the wall forming the inside of the door (110), wherein the edge region (12) and the wall portion (13) substantially are vertical to each other, and wherein the holder is configured as groove (50) which extends at an angle in the range between 30° and 60°, preferably at an angle of 45° with respect to the wall portion (13) or the edge region (12).

7. The door (110) according to any of the preceding claims, **characterized in that** the holder is configured as groove (50) and that the spare seal (45) includes a projection which can be accommodated in the groove (50) such that the spare seal (45) is secured against falling out.

8. The door (110) according to claim 7, **characterized in that** the projection of the spare seal (45) is formed by a web (46) on which one or more extensions (47) are arranged, which in the inserted condition of the spare seal (45) rest against the groove wall and are inclined with respect to the groove wall in insertion direction of the web (46) into the groove (50).

9. The door (110) according to any of the preceding claims, **characterized in that** only the portion located between inner door (10) and outer door (20) is left of the seal (40), and that a spare seal (45) is accommodated in the holder.

10. A refrigerator and/or freezer with a door (110) according to any of claims 1 to 9.

## Revendications

1. Porte (110) pour un appareil de réfrigération et/ou de congélation, la porte présentant une porte intérieure (10) et une porte extérieure (20) ainsi qu'un joint d'étanchéité (40) qui est agencé par tronçons dans une zone entre la porte intérieure (10) et la porte extérieure (20) et qui présente un point destiné à la rupture (42'), la porte présentant un support (50) sur lequel peut être monté un joint d'étanchéité de rechange (45),
**caractérisée en ce que**
le point destiné à la rupture (42') est adjacent au tronçon du joint d'étanchéité (40) qui est reçu entre la porte intérieure (10) et la porte extérieure (20),
le tronçon reçu entre la porte intérieure et la porte extérieure (20) est un pied de joint (42) du joint d'étanchéité (40), serré entre la porte intérieure (10) et la porte extérieure (20), et le point destiné à la rupture (42') est agencé dans la zone d'extrémité du pied de joint (42), de telle sorte que lorsqu'on échange le joint d'étanchéité (40), ce pied de joint (42) reste en place et est séparé de la partie restante du joint d'étanchéité (40).

2. Porte (110) selon la revendication précédente, **caractérisée en ce que** l'espace de la porte (110) limité par la porte intérieure (10) et la porte extérieure (20) est rempli de mousse et **en ce que** le tronçon du joint d'étanchéité (40) reçu entre la porte intérieure (10) et la porte extérieure (20) est réalisé et agencé de telle sorte qu'il assure l'étanchéité mousse de la porte (110).

3. Porte (110) selon l'une des revendications précédentes, **caractérisée en ce que** le support pour fixer un joint d'étanchéité de rechange (45) est réalisé périphérique.

4. Porte (110) selon l'une des revendications précédentes, **caractérisée en ce que** le support pour recevoir un joint d'étanchéité de rechange (45) est réalisé sous forme de rainure (50) ou de saillie.

5. Porte (110) selon l'une des revendications précédentes, **caractérisée en ce que** la porte intérieure (10) présente une paroi formant la face intérieure de la porte (110) et une zone de bord (12) en retrait par paliers par rapport à cette paroi, ce qui forme une zone de coin, et **en ce que** le support pour le joint d'étanchéité de rechange (45) est agencé dans cette zone de coin.

6. Porte (110) selon la revendication 5, **caractérisée en ce que** la zone de coin est limitée par la zone de bord (12) en retrait et par un tronçon de paroi (13) qui relie la zone de bord (12) à la paroi formant la face intérieure de la porte (110), la zone de bord (12) et le tronçon de paroi (13) étant sensiblement perpendiculaires l'un par rapport à l'autre et le support étant réalisé sous forme de rainure (50) qui s'étend sous un angle dans la plage entre 30° et 60°, de préférence sous un angle de 45° par rapport au tronçon de paroi (13) ou à la zone de bord (12).

7. Porte (110) selon l'une des revendications précédentes, **caractérisée en ce que** le support est réalisé sous forme de rainure (50) et **en ce que** le joint d'étanchéité de rechange (45) présente une saillie qui peut être reçue de telle sorte dans la rainure (50) que le joint d'étanchéité de rechange (45) est sécurisé contre une chute.

8. Porte (110) selon l'une des revendications précédentes, **caractérisée en ce que** la saillie du joint d'étanchéité de rechange (45) est formée par une entretoise (46) sur laquelle sont agencés un ou plusieurs prolongements (47) qui, lorsque le joint d'étanchéité de rechange (45) est mis en place, sont en appui sur la paroi de la rainure et inclinés par rapport à la paroi de la rainure dans le sens d'introduction de l'entretoise (46) dans la rainure (50).

9. Porte (110) selon l'une des revendications précédentes, **caractérisée en ce que** du joint d'étanchéité (40), il ne reste que le tronçon se trouvant entre la porte intérieure (10) et la porte extérieure (20), et **en ce que** dans le support est reçu un joint d'étanchéité de rechange (45).

10. Appareil de réfrigération et/ou de congélation comportant une porte (110) selon l'une des revendications 1 à 9.
